# EUROPÄISCHE PATENTSCHRIFT

(11) **EP 0 922 073 B1**
(45) Veröffentlichungstag und Bekanntmachung des Hinweises auf die Patenterteilung: **15.03.2000**
(21) Anmeldenummer: 97941949.6
(22) Anmeldetag: 21.08.1997
(51) Int. Cl.: C08L 69/00

(54) **FORMMASSEN AUS EINER POLYCARBONATMISCHUNG UND EINEM SILOXANNETZWERKKAUTSCHUK**
MOULDING COMPOUNDS CONSISTING OF A POLYCARBONATE MIXTURE AND A SILOXANE RETICULAR RUBBER
MATIERES DE MOULAGE COMPRENANT UN MELANGE DE POLYCARBONATE ET UN CAOUTCHOUC DE SILOXANE A STRUCTURE RETICULAIRE

(30) Priorität: 30.08.1996 DE 19635078
(43) Veröffentlichungstag der Anmeldung: 16.06.1999
(73) Patentinhaber: BASF AKTIENGESELLSCHAFT, 67056 Ludwigshafen (DE)
(72) Erfinder: WEBER, Martin, D-67487 Maikammer (DE); GÜNTHERBERG, Norbert, D-67346 Speyer (DE)
(86) Internationale Anmeldenummer: EP9704543
(87) Internationale Veröffentlichungsnummer: WO9808900

(56) Entgegenhaltungen:
- EP-A- 0 663 425
- WO-A-93/22382

## Beschreibung

Die vorliegende Erfindung betrifft Formmassen, die als wesentliche Komponenten
A) 25 bis 95,4 Gew.-% mindestens eines aromatischen Polycarbonats,
B) 2 bis 30 Gew.-% mindestens eines Pfropfpolymerisats, aufgebaut aus
   b₁) 40 bis 80 Gew.-% einer Pfropfgrundlage aus einem kautschukelastischen Polymeren auf Basis von Alkylacrylaten mit 1 bis 8 C-Atomen im Alkylrest und mit einer Glasübergangstemperatur von unter 10°C
   b₂) 20 bis 60 Gew.-% einer Pfropfauflage aus
   b₂₁) 60 bis 95 Gew.-% Styrol oder substituierten Styrolen der allgemeinen Formel I 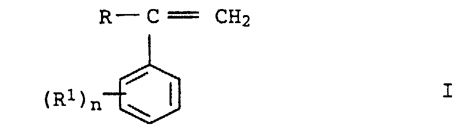 worin R einen Alkylrest mit 1 bis 8 C-Atomen oder ein Wasserstoffatom und R¹ einen Alkylrest mit 1 bis 8 C-Atomen darstellen und n den Wert 1, 2 oder 3 hat und
   b₂₂) 5 bis 40 Gew.-% mindestens eines ungesättigten Nitrils
C) 2 bis 50 Gew.-% eines Copolymerisats aus
   c₁) 60 bis 95 Gew.-% Styrol oder substituierten Styrolen der allgemeinen Formel I oder deren Mischungen
   c₂) 5 bis 40 Gew.-% mindestens eines ungesättigten Nitrils,
D) 0,5 bis 25 Gew.-% mindestens eines Netzwerkkautschukes auf der Basis von Siloxanen und Acrylaten oder Methacrylaten, dessen Pfropfauflage eine Glasübergangstemperatur von mindestens 100°C aufweist,
E) 0,1 bis 5 Gew.-% mindestens eines Copolymeren aus mindestens zwei unterschiedlichen Estern der Acrylsäure oder der Methacrylsäure oder deren Mischungen,
F) 0 bis 25 Gew.-% mindestens einer halogenfreien Phosphorverbindung und
G) 0 bis 45 Gew.-% Zusatzstoffe,
wobei sich die Summe der Komponenten A bis G zu 100 Gew.-% addiert,
enthalten. Darüberhinaus betrifft die vorliegende Erfindung die Verwendung dieser Formmassen zur Herstellung von Formkörpern, Folien oder Fasern und die Formkörper, Folien oder Fasern, die aus den erfindungsgemäßen Formmassen erhältlich sind.

Siloxankautschuke werden häufig in Polymerblends, die Polycarbonate enthalten, eingesetzt, um deren Zähigkeit zu verbessern. Für diesen Zweck werden unterschiedliche Siloxankautschuke verwendet. Beispielsweise werden in der DE-A 42 38 906 mehrschalige teilvernetzte Pfropfkautschuke mit einem Acrylatkern und einer Siloxanhülle eingesetzt. Vernetzte Siloxane können auch als Pfropfgrundlage für Siloxanpfropfkautschuke dienen (siehe z.B. EP-A 260 559). Eine andere Gruppe von Siloxankautschuken stellen die Netzwerkkautschuke dar, die auch als Kompoundkautschuke bezeichnet werden. Letztere unterscheiden sich von Pfropfkautschuken dadurch, daß sich die Siloxankautschukkomponente und mindestens eine weitere Kautschukkomponente netzwerkartig durchdringen, wobei die Kautschuke miteinander über chemische Bindungen verknüpft sind. Diese Netzwerke können auch mit einer oder mehreren Pfropf hüllen versehen werden.

Aus der EP-A 369 200 waren beipielsweise Mischungen aus Polycarbonat, Styrol/Acrylnitril-Copolymeren und Netzwerkkautschuken auf Siloxanbasis bekannt. Darin bewirkt der Netzwerkkautschuk, daß Formkörper aus den Formmassen eine matte Oberfläche haben. Der JP-OS 6049313 waren schlagzähe Formmassen aus Polycarbonat und Siloxannetzwerkkautschuk zu entnehmen.

Siloxannetzwerk Kautschuk enthaltende Polycarbonat/Polyester-Blends sind in der EP-A 307 963 offenbart. Diese Formmassen enthalten als weitere Komponente Styrol/Acrylnitril-Copolymere und zeichnen sich durch ihre gute Tieftemperaturzähigkeit aus.

In der EP-A 641 827 werden leicht fließende Blends aus Polycarbonat, Acrylnitril/Butadien/Styrol (ABS) und einem Netzwerkkautschuk auf Siloxanbasis beschrieben. Diese Formmassen können kleine Mengen anderer Polymerer wie Vinylpolymerer enthalten, die als Nebenprodukte bei der Pfropfung der Siloxannetzwerkkautschuke gebildet werden.

Die bekannten Polycarbonatblends, die Netzwerkkautschuke auf Siloxanbasis enthalten, haben den Nachteil, daß die daraus hergestellten Formteile, je nachdem bei welcher Temperatur sie geformt werden, unterschiedliche Durchstoßarbeiten aufweisen. Dies bedeutet, daß die Durchstoßarbeit von den Verarbeitungsbedingungen, d.h. der jeweiligen Massetemperatur abhängig ist, was sich besonders dann negativ auswirkt, wenn großteilige Formteile hergestellt werden sollen. In der Form kühlt die Formmasse selbstverständlich nicht stets gleichmäßig ab, d.h. an unterschiedlichen Stellen des Formteiles werden unterschiedliche Werte für die Durchstoßarbeit gemessen.

Aufgabe der vorliegenden Erfindung war es deshalb, Formmassen aus Polycarbonat und Siloxannetzwerkkautschuken zur Verfügung zu stellen, die die Vorteile der bekannten Blends beibehalten, d.h. tieftemperaturzäh und leicht fließend sind, sich aber unabhängig von den Verfahrensbedingungen verarbeiten lassen.

Diese Aufgabe wird von den eingangs definierten Formmassen erfüllt. Besondere Ausführungsformen sind den Unteransprüchen und der Beschreibung zu entnehmen.

### Komponente A

Als Komponente A enthalten die Formmassen erfindungsgemäß von 25 bis 95,4 Gew.-%, bezogen auf die Summe der Komponenten A bis G, mindestens eines Polycarbonates. Bevorzugte erfindungsgemäße Formmassen enthalten von 25 bis 88,8 Gew.-%, bezogen auf die Summe der Komponenten A bis G, der Komponente A. Besonders bevorzugt sind Formmassen gemäß der Erfindung, die von 27,5 bis 86,2 Gew.-%, bezogen auf die Summe der Komponenten A bis G, der Komponente A enthalten.

Bevorzugt werden als Komponente A halogenfreie Polycarbonate eingesetzt. Geeignete halogenfreie Polycarbonate sind beispielsweise solche auf Basis von Diphenolen der allgemeinen Formel II 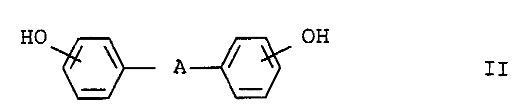 worin A eine Einfachbindung, eine C₁- bis C₃-Alkylen-, eine C₂-bis C₃-Alkyliden-, eine C₃- bis C₆-Cycloalkylidengruppe, sowie -S- oder -SO₂- bedeutet.

Bevorzugte Diphenole der Formel II sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyclohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten ηᵣₑₗ von 1,10 bis 1,50, insbesondere von 1,25 bis 1,40 aufweisen. Dies entspricht mittleren Molekulargewichten M_{w} (Gewichtsmittelwert) von 10 000 bis 200 000, vorzugsweise von 20 000 bis 80 000.

Die Diphenole der allgemeinen Formel II sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

(Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethylbutyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenol, 3,5-di-t-Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

### Komponente B

Ein oder eine Mischung unterschiedlicher Pfropfcopolymerisate werden als Komponente B in den erfindungsgemäßen Formmassen in Mengen von 2 bis 30 Gew.-%, bezogen auf die Summe der Komponenten A bis G, eingesetzt. Bevorzugte erfindungsgemäße Formmassen enthalten von 2 bis 25, besonders bevorzugt von 6 bis 22,5 Gew.-%, bezogen auf die Summe der Komponenten A bis G, mindestens eines Pfropfcopolymerisates B.

Die Pfropfpolymerisate B sind aufgebaut aus
b₁) 40 bis 80 Gew.-%, vorzugsweise 50 bis 70 Gew.-% einer Pfropfgrundlage aus einem kautschukelastischen Polymeren auf der Basis von Alkylacrylaten mit 1 bis 8 C-Atomen im Alkylrest und mit einer Glasübergangstemperatur von unter 0°C
b₂) 20 bis 60 Gew.-%, vorzugsweise 30 bis 50 Gew.-% einer Pfropfauflage aus
   b₂₁) 60 bis 95 Gew.-%, bevorzugt 70 bis 85 Gew.-% Styrol oder substituierten Styrolen der allgemeinen Formel I 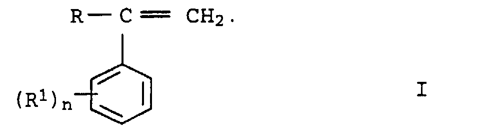 worin R einen C₁- bis C₈-Alkylrest, bevorzugt Methyl oder Ethyl, oder Wasserstoff bedeutet und R¹ einen C₁- bis C₈-Alkylrest, bevorzugt Methyl oder Ethyl, darstellt und n den Wert 1, 2 oder 3 hat oder deren Mischungen und
   b₂₂) 5 bis 40 Gew.-%, vorzugsweise 15 bis 30 Gew.-% mindestens eines ungesättigten Nitrils, bevorzugt Acrylnitril oder Methacrylnitril oder deren Mischungen.

Für die Pfropfgrundlage b₁ kommen Polymerisate in Betracht, deren Glasübergangstemperatur unterhalb von 10°C, vorzugsweise unterhalb von 0°C, besonders bevorzugt unterhalb von -20°C liegt. Dies sind z.B. Elastomere auf der Basis von C₁- bis C₈-Alkylestern der Acrylsäure, die gegebenenfalls weitere Comonomere enthalten können.

Bevorzugt sind Pfropfgrundlagen b₁, die aufgebaut sind aus
b₁₁) 70 bis 99,9 Gew.-%, vorzugsweise 99 Gew.-% mindestens eines Alkylacrylates mit 1 bis 8 C-Atomen im Alkylrest, vorzugsweise n-Butylacrylat und/oder 2-Ethyl-hexylacrylat, insbesondere n-Butylacrylat als alleiniges Alkylacrylat
b₁₂) 0 bis 30 Gew.-%, insbesondere 20 bis 30 Gew.-% eines weiteren copolymerisierbaren monoethylenisch ungesättigten Monomeren, wie Butadien, Isopren, Styrol, Acrylnitril, Methylmethacrylat oder Vinylmethylether oder deren Mischungen
b₁₃) 0,1 bis 5 Gew.-%, vorzugsweise 1 bis 4 Gew.-% eines copolymerisierbaren, polyfunktionellen, vorzugsweise bi- oder trifunktionellen, die Vernetzung bewirkenden Monomeren.
   Als solche bi- oder polyfunktionellen Vernetzungsmonomeren b₁₃) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanurat. Als besonders günstiges Vernetzungsmonomeres hat sich der Acrylsäureester des Tricyclodecenylalkohols erwiesen (vgl. DE-A 12 60 135).

Diese Art von Pfropfgrundlagen ist an sich bekannt und in der Literatur beschrieben, beispielsweise in der DE-A 31 49 358.

Von den Pfropfauflagen b2 sind diejenigen bevorzugt, in denen b₂₁ Styrol oder α-Methylstyrol oder deren Mischungen und b₂₂ Acrylnitril oder Methacrylnitril bedeutet. Als bevorzugte Monomeren-Gemische werden vor allem Styrol und Acrylnitril oder α-Methylstyrol und Acrylnitril eingesetzt. Die Pfropfauflagen sind erhältlich durch Copolymerisation der Komponenten b₂₁ und b₂₂.

Die Pfropfgrundlage b₁ der Pfropfpolymerisate B, die aus den Komponenten b₁₁, gegebenenfalls b12 und b13 aufgebaut ist, wird auch als ASA-Kautschuk bezeichnet. Ihre Herstellung ist an sich bekannt und beispielsweise in der DE-A 28 26 925, der DE-A 31 49 358 und der DE-A 34 14 118 beschrieben.

Die Herstellung der Pfropfpolymerisate B kann beispielsweise nach der in der DE-PS 12 60 135 beschriebenen Methode erfolgen.

Der Aufbau der Pfropfauflage (Pfropfhülle) der Pfropfpolymerisate kann ein- oder zweistufig erfolgen.

Im Falle des einstufigen Aufbaues der Pfropfhülle wird ein Gemisch der Monomeren b₂₁ und b₂₂ in dem gewünschten Gew.-Verhältnis im Bereich von 95:5 bis 50:50, vorzugsweise von 90:10 bis 65:35 in Gegenwart des Elastomeren b₁, in an sich bekannter Weise (vgl. z.B. DE-OS 28 26 925), vorzugsweise in Emulsion, polymerisiert.

Im Falle eines zweistufigen Aufbaus der Pfropfhülle b₂ macht die 1. Stufe im allgemeinen 20 bis 70 Gew.-%, vorzugsweise 25 bis 50 Gew.-%, bezogen auf b₂, aus. Zu ihrer Herstellung werden vorzugsweise nur Styrol oder substituierte Styrole oder deren Mischungen (b₂₁) verwendet.

Die 2. Stufe der Pfropfhülle macht im allgemeinen 30 bis 80 Gew.-%, insbesondere 50 bis 75 Gew.-%, jeweils bezogen auf b₂, aus. Zu ihrer Herstellung werden Mischungen aus den Monomeren b₂₁ und den Nitrilen b₂₂ im Gewichtsverhältnis b₂₁/b₂₂ von im allgemeinen 90:10 bis 60:40, insbesondere 80:20 bis 70:30 angewendet.

Die Bedingungen der Pfropfpolymerisation werden vorzugsweise so gewählt, daß Teilchengrößen von 50 bis 700 nm (d₅₀-Wert der integralen Massenverteilung) resultieren. Maßnahmen hierzu sind bekannt und z.B. in der DE-OS 28 26 925 beschrieben.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfpolymerisate mit unterschiedlicher Teilchengröße zu verwenden.

Um dies zu erreichen, werden die Teilchen des Kautschuks in bekannter Weise, z.B. durch Agglomeration, vergrößert, so daß der Latex bimodal (50 bis 180 nm und 200 bis 700 nm) aufgebaut ist.

In einer bevorzugten Ausführungsform wird eine Mischung aus zwei Pfropfpolymerisaten mit Teilchendurchmessern (d₅₀-Wert der integralen Massenverteilung) von 50 bis 180 nm bzw. 200 bis 700 nm im Gewichtsverhältnis 70:30 bis 30:70 eingesetzt.

Der chemische Aufbau der beiden Pfropfpolymerisate ist vorzugsweise derselbe, obwohl die Hülle des grobteiligen Pfropfpolymerisates insbesondere auch zweistufig aufgebaut werden kann.

Mischungen aus der Komponente A und B, wobei letztere ein grob- und ein feinteiliges Pfropfpolymerisat aufweist, sind z.B. in der DE-OS 36 15 607 beschrieben. Mischungen aus der Komponente A und B, wobei letzere eine zweistufige Pfropfhülle aufweist, sind aus EP-A 111 260 bekannt.

### Komponente C

Als Komponente C enthalten die erfindungsgemäßen Formmassen von 2 bis 50 Gew.-%, bezogen auf die Summe der Komponenten A bis G, mindestens eines Copolymerisates auf der Basis von Styrol oder substituierten Styrolen und ungesättigten Nitrilen. Bevorzugte erfindungsgemäße Formmassen enthalten die Komponente C in Anteilen von 5 bis 40, insbesondere von 6 bis 35 Gew.-%, bezogen auf die Summe der Komponente A bis G.

Die Copolymerisate C sind erfindungsgemäß aus
c₁) 60 bis 95 Gew.-%, vorzugsweise 70 bis 85 Gew.-% Styrol oder substituierten Styrolen der allgemeinen Formel I oder deren Mischungen und
c₂) 5 bis 40 Gew.-%, vorzugsweise 15 bis 30 Gew.-% mindestens eines ungesättigten Nitrils, bevorzugt Acrylnitril oder Methacrylnitril oder deren Mischungen
aufgebaut.

Die Copolymerisate C sind harzartig, thermoplastisch und kautschukfrei. Besonders bevorzugte Copolymerisate C sind solche aus Styrol und Acrylnitril, aus α-Methylstyrol und Acrylnitril oder aus Styrol, α-Methylstyrol und Acrylnitril. Es können auch mehrere der beschriebenen Copolymere gleichzeitig eingesetzt werden.

Solche Copolymerisate entstehen häufig bei der Pfropfpolymerisation zur Herstellung der Komponente B als Nebenprodukte, besonders dann, wenn große Mengen Monomere auf kleine Mengen Kautschuk gepropft werden.

Die Copolymerisate C sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 auf, dies entspricht mittleren Molekulargewichten M_{w} (Gewichtsmittelwert) von 40 000 bis 2 000 000.

### Komponente D

Als weitere Komponente enthalten die erfindungsgemäßen Formmassen 0,5 bis 25 Gew.-%, bezogen auf die Summe der Komponenten A bis G mindestens eines Netzwerkkautschukes D. Bevorzugte erfindungsgemäße Formmassen enthalten die Netzwerkkautschuke D in Mengen von 1 bis 20 Gew.-%, bezogen auf die Summe der Komponenten A bis G. Besonders bevorzugte Formmassen im Sinne der Erfindung weisen von 1,5 bis 17,5 Gew.-%, bezogen auf die Summe der Komponenten A bis G, an Netzwerkkautschuken D auf.

Erfindungsgemäß ist D ein Netzwerkkautschuk auf der Basis von Siloxanen und Acrylaten oder Methacrylaten.

Die Netzwerkkautschuke D enthalten im allgemeinen
d₁) 30 bis 95 Gew.-%, bevorzugt von 40 bis 90 Gew.-% eines Netzwerkes als Pfropfgrundlage, das aus
   d₁₁) 10 bis 90 Gew.-%, bevorzugt von 20 bis 80 Gew.-% mindestens eines Polyorganosiloxans und
   d₁₂) 10 bis 90 Gew.-%, bevorzugt von 20 bis 80 Gew.-% eines Polyalkylacrylates oder eines Polyalkylmethacrylates oder deren Mischungen gebildet wird und
d₂) 5 bis 70 Gew.-%, bevorzugt von 10 bis 60 Gew.-% einer Pfropfauflage.

Bevorzugte Polysiloxane leiten sich von cyclischen Organosiloxanen mit vorzugsweise drei bis sechs Siliziumatomen ab. Beispiele geeigneter Siloxane sind Hexamethylcyclotrisiloxan, Octamethylcyclotetrasiloxan, Decamethylcyclopentasiloxan, Dodecamethylcyclohexasiloxan, Trimethyltriphenylcyclotrisiloxan, Tetramethyltetraphenylcyclotetrasiloxan oder Octaphenylcyclotetrasiloxan. Die Polysiloxane können aus einem oder verschiedenen Organosiloxanen aufgebaut sein.

Darüber hinaus enthalten die Polyorganosiloxane d₁₁ in der Regel von 0,1 bis 30 Gew.-%, bezogen auf d₁₁, mindestens eines Vernetzers . Tri- oder tetrafunktionelle Silane wie Trimethoxymethylsilan, Triethoxyphenylsilan, Tetramethoxysilan, Tetraethoxysilan, Tetra-n-propoxysilan oder Tetrabutoxysilan können als Vernetzer eingesetzt werden. Darunter sind tetrafunktionelle Silane besonders bevorzugt.

Weiterhin enthalten die Polyorganosiloxane im allgemeinen von 0 bis 10 Gew.-%, bezogen auf d₁₁, an pfropfaktiven Monomeren. Als pfropfaktive Monomere können beispielsweise ungesättigte Silane der allgemeinen Formeln III bis V eingesetzt werden: 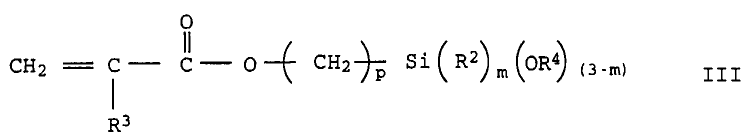 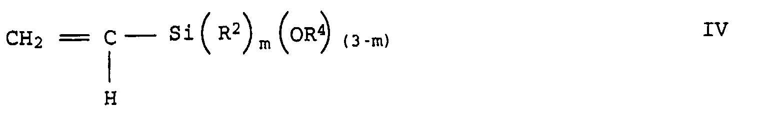 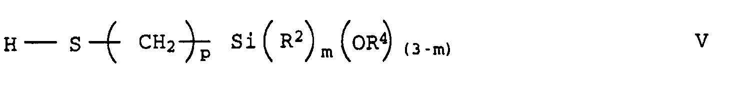 worin R² Methyl, Ethyl, n-Propyl, i-Propyl oder Phenyl ist, R³ Wasserstoff oder Methyl bedeutet, R⁴ ein C₁- bis C₁₀-Alkyl oder C₆- bis C₁₈-Aryl, bevorzugt Methyl, Ethyl, n-Propyl, i-Propyl, n-Butyl, i-Butyl, t-Butyl oder Phenyl ist, m den Wert 0, 1 oder 2 hat und p für eine ganze Zahl von 1 bis 6 steht.

Bevorzugte pfropfaktive Monomere sind die Methacryloylsilane der allgemeinen Formel III. Als Beispiele seien genannt:
β-Methacryloyloxyethyldimethoxymethylsilan
γ-Methacryloyloxypropylmethoxydimethylsilan
γ-Methacryloyloxypropyldimethoxymethylsilan
γ-Methacryloyloxypropyltrimethoxysilan
γ-Methacryloyloxypropylethoxydiethylsilan
γ-Methacryloyloxypropyldiethoxymethylsilan
δ-Methacryloyloxybutyldiethoxymethylsilan.

Verfahren zur Herstellung von Polyorganosiloxanen sind beipielsweise in der US 2,891,920 oder 3,294,725 beschrieben Bevorzugt werden die Polyorganosiloxane dadurch hergestellt, daß in einem Lösungsmittel eine Mischung der Organosiloxane, der Vernetzer und gewünschtenfalls der pfropfaktiven Monomeren unter Scherung mit Wasser in Gegenwart eines Emulsionsmittels wie einer Alkylsulfonsäure oder vorzugsweise einer Alkylbenzolsulfonsäure gemischt werden. Als Emulsionsmittel können auch die Metallsalze der Alkylsulfonsäure oder der Alkylbenzolsulfonsäure eingesetzt werden.

Als monomere Bausteine enthalten die Polyalkylacrylate bzw. Polyalkylmethacrylate d₁₂ im allgemeinen Alkylacrylate oder Methacrylate oder deren Mischungen, Vernetzer und pfropfaktive Monomere, wobei Vernetzer und pfropfaktive Monomere jeweils allein oder zusammen verwendet werden können. Der Anteil von Vernetzer und pfropfaktiven Monomeren liegt in der Regel zusammen im Bereich von 0,1 bis 20 Gew.-%, bezogen auf d₁₂.

Beispiele geeigneter Alkylacrylate bzw. Alkylmethacrylate sind Methylacrylat, Ethylacrylat, n-Propylacrylat, n-Butylacrylat, 2-Ethylhexylacrylat, Hexylmethacrylat, 2-Ethylhexylmethacrylat oder n-Laurylmethacrylat. Besonders bevorzugt wird n-Butylacrylat eingesetzt.

Der Vernetzer kann beispielsweise Ethylenglycoldimethacrylat, Propylenglycoldimethacrylat, l,3-Butylenglycoldimethacrylat oder 1,4-Butylenglycoldimethacrylat sein.

Allylmethacrylat, Triallylcyanurat oder Triallylisocyanurat sind Beispiele geeigneter pfropfaktiver Monomerer. Darunter kann Allylmethacrylat auch als Vernetzer wirken.

Die Herstellung des Netzwerkes erfolgt dadurch, daß die monomeren Bausteine der Komponente d₁₂ zu dem Polyorganosiloxan d₁₁ gegeben werden, der durch Zugabe von einer wässrigen Lösung einer Base wie Natriumhydroxid, Kaliumhydroxid oder Calciumhydroxid neutralisiert ist. Dadurch wird das Polyorganosiloxan angequollen. Anschließend werden übliche Radikalstarter zugesetzt. Im Verlauf der Polymerisationsreaktion bildet sich ein Netzwerk, bei dem die Komponenten d₁₁ und d12 sich gegenseitig durchdringen. Die Netzwerke können auch miteinander über chemische Bindungen verknüpft sein.

Ganz besonders bevorzugt sind Netzwerke bei denen das Polyorganosiloxan eine Hauptkette aus Dimethylsiloxan aufweist und d₁₂ ein Polyalkylacrylat ist, das eine Hauptkette aus n-Butylacrylat hat.

Der Gelgehalt des Netzwerkes beträgt in der Regel mehr als 80 % (gemessen durch Extraktion mit Toluol bei 90°C über einen Zeitraum von 12 h).

Die Pfropfauflage d₂ ist in der Regel aus vinylischen Monomeren aufgebaut. Zu diesen zählen Styrol, α-Methylstyrol, Vinyltoluol, Acrylsäureester, z.B. Methylacrylat, Ethylacrylat, oder n-Butylacrylat, Methacrylsäureester wie Methylmethacrylat oder Ethylmethacrylat, Nitrile, beispielsweise Acrylnitril oder Methacrylnitril. Die vinylischen Monomeren können alleine verwendet werden. Es können aber auch Mischungen unterschiedlicher Monomerer eingesetzt werden. Dabei werden die Monomeren im allgemeinen derart gewählt, daß die Pfropfauflage eine Glasübergangstemperatur von mindestens 80°C, bevorzugt im Bereich von 80 bis 110°C (bestimmt mittels Torsionspendelmessung bei einer Frequenz von 1 Hz und einer Aufheizrate von 10°C/min) hat. Besonders bevorzugt werden Pfropfauflagen, die einen überwiegenden Anteil an Methylmethacrylat aufweisen, bevorzugt Pfropfauflagen mit mindestens 85 Gew.-% Methylacrylat. Besonders bevorzugt werden Pfropfauflagen mit einem Anteil von 95 bis 100 Gew.-% Methylmethacrylat. Neben Methylmethacrylat werden bevorzugt Styrol, n-Butylacrylat oder Cyclohexylmethacrylat eingesetzt. Ganz besonders bevorzugt wird Methylmethacrylat alleine verwendet.

### Komponente E

Als Komponente E enthalten die erfindungsgemäßen Formmassen von 0,1 bis 5 Gew.-% mindestens eines Copolymeren E. Bevorzugt werden erfindungsgemäße Formmassen, die von 0,2 bis 4, insbesondere von 0,3 bis 3 Gew.-%, bezogen auf die Summe der Komponenten A bis G, der Komponente E enthalten.

Die Copolymeren E sind erfindungsgemäß aus mindestens zwei unterschiedlichen Alkylestern, aromatischen oder alkylaromatischen Ester der Acrylsäure oder der Methacrylsäure oder deren Mischungen aufgebaut.

Im allgemeinen haben die Ester 1 bis 10, bevorzugt 1 bis 8 Kohlenstoffatome im Alkylrest. Der Alkylrest kann sowohl linear als auch verzweigt sein. Zu den Alklyresten zählt Methyl, Ethyl, n-Propyl, i-Propyl, n-Butyl, i-Butyl, t-Butyl, n-Pentyl, 2-Ethylhexyl oder Cyclohexyl. Bevorzugt werden Methylmethacrylat, Cyclohexylmethacrylat, n-Butylacrylat oder 2-Ethylhexylacrylat verwendet. Unter den aromatischen Estern sind Ester mit 6 bis 18 Kohlenstoffen bevorzugt, darunter insbesondere Phenyl. Besonders bevorzugt werden Copolymere E, die von 70 bis 99, insbesondere von 80 bis 93 Gew.-% Methylmethacrylat und von 1 bis 30, insbesondere von 7 bis 20 Gew.-% n-Butylacrylat enthalten.

Erfindungsgemäß haben die Polymeren E ein hohes Molekulargewicht. In der Regel weisen sie Molekulargewichte (Zahlenmittelwert M_{w}) von mindestens 1.000.000 g/mol (gemessen mittels Gelpermeationschromatographie in Tetrahydrofuran gegen einen Polystyrolstandard) auf. Bevorzugte Copolymere E haben Molekulargewichte M_{w} von 1.100 000 g/mol oder darüber, beispielsweise mindestens 1.200 000 g/mol. Im allgemeinen haben die Copolymeren E eine Glasübergangstemperatur im Bereich von 40 bis 125, bevorzugt 70 bis 120°C (bestimmt mittels DSC-Messungen, bei einer Aufheizrate von 10 K/min, zweiter Cyclus nach Aufheizen auf 175°C und Abkühlen auf Raumtemperatur).

### Komponente F

Die erfindungsgemäßen Formmassen können auch mit Flammschutzmitteln ausgerüstet sein. Sie enthalten erfindungsgemäß von 0 bis 25, bevorzugt von 0 bis 17,5 Gew-%, bezogen auf die Summe der Komponenten A bis G, mindestens einer halogenfreien Phosphorverbindung. Beispielsweise können sie in Mengen von 5 bis 15 Gew.-%, bezogen auf die Summe der Komponenten A bis G, in den Formmassen enthalten sein.

Derartige Phosphorverbindungen sind an sich bekannt oder nach bekannten Methoden erhältlich.

Bevorzugt sind Phosphorverbindungen der allgemeinen Formel VI, in denen mindestens zwei der Reste am Phosphor gleich sind: 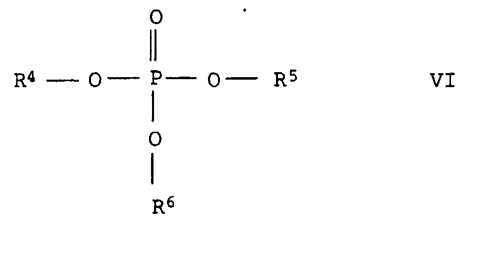 in der
- R⁴, R⁵, R⁶: unabhängig voneinander halogenfreie C₁- bis C₈-Alkylgruppen oder halogenfreie C₆- bis C₂₀-Arylgruppen, die ein- bis zweifach durch C₁- bis C₄-Alkylgruppen substituiert sein können.

Die Verwendung von aromatischen Phosphaten, insbesondere von Phosphaten der allgemeinen Formel VI, in denen die Reste für Phenyl- oder Kresylgruppen, die ihrerseits auch ein- bis zweifach, vorzugsweise durch Methyl-, Ethyl- und Isopropylgruppen substituiert sein können, stehen, ist bevorzugt.

Als besonders geeignete Phosphorverbindungen der allgemeinen Formel VI lassen sich beispielsweise Tri-(2,6-dimethylphenyl)-phosphat, Triphenylphosphat, Trikresylphosphat, Diphenyl-2-ethyl-kresylphosphat, Diphenyl-kresylphosphat und Tri-(isopropylphenyl)-phosphat nennen.

Um eine erhöhte Vicat-Temperatur in den Mischungen einzustellen, können auch Mischungen der obengenannten Phosphate mit beispielsweise Triphenylphosphinoxid oder Tri-(2,6-dimethylphenyl)-phosphinoxid eingesetzt werden.

Weiterhin ist der Zusatz der in der DE-A 38 24 356 genannten Phosphate wie Phosphorsäure-bis-phenyl-(4-phenylphenyl)-ester, Phosphorsäure-phenyl-bis-(4-phenylphenyl)-ester, Phosphorsäuretris-(4-phenylphenyl)-ester, Phosphorsäure-bis-phenyl-(benzylphenyl)-ester, Phosphorsäure-phenyl-bis-(benzylphenyl)-ester, Phosphorsäure-tris-(benzylphenyl)-ester, Phosphorsäure-phenylbis-[(1-phenylethyl)-phenyl]-ester, Phosphorsäure-phenylbis-[(l-methyl-1-phenylethyl)-phenyl]-ester und Phosphorsäurephenyl-bis-[4-(1-phenylethyl)-2,6-dimethylphenyl]-ester zur Erhöhung der Vicat-Temperatur der Mischungen geeignet.

Des weiteren können Resorcinoldiphosphat bzw. entsprechende höhere Oligomere, Hydrochinondiphosphat oder höhere Oligomere dieser Verbindung als Komponente F eingesetzt werden. Derartige Phosphorverbindungen sind beispielsweise in der EP-A 522 397 beschrieben.

### Komponente G

Neben den Komponenten A bis F enthalten die Formmassen erfindungsgemäß von 0 bis 45, bevorzugt von 0 bis 35 Gew.-%, bezogen auf die Summe der Komponenten A bis G, an Zusatzstoffen.

Unter Zusatzstoffen sind z.B. faser- oder teilchenförmige Füllstoffe oder deren Mischung, Verarbeitungshilfsmittel, beispielsweise Schmiermittel, Gleit- oder Entformungsmittel, Stabilisatoren wie UV-Stabilisatoren, Phosphorstabilisatoren, Antioxidantien, Antistatika oder Farbmittel zu verstehen.

Füllstoffe sind im allgemeinen in Mengen von 0 bis 40, bevorzugt von 0 bis 30 Gew.-%, bezogen auf die Summe der Komponenten A bis G in den erfindungsgemäßen Formmassen enthalten. Verarbeitungshilfsmittel werden üblicherweise in Mengen von 0 bis 5, bevorzugt von 0 bis 3 Gew.-%, bezogen auf die Summe der Komponenten A bis G verwendet. Stabilisatoren und Antistatika haben in der Regel einen Anteil von 0 bis 3, bevorzugt von 0 bis 2 Gew.-%, bezogen auf die Summe der Komponenten A bis G, an den erfindungsgemäßen Formmassen. Farbmittel können z.B. in Mengen von 0 bis 10, bevorzugt von 0 bis 8 Gew.-%, bezogen auf die Summe der Komponenten A bis G, verwendet werden.

Zu den bevorzugten Füllstoffen zählen Kohlefasern, insbesondere Glasfasern. Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen, genannt. Insbesondere kommen Al-Flocken (K 102 der Fa. Transmet) für EMI-Zwecke (electro-magnetic interference) in Betracht; ferner Abmischen dieser Masse mit zusätzlichen Kohlenstoffasern, Leitfähigkeitsruß oder nickelbeschichteten C-Fasern.

Verarbeitungshilfsmittel sind allgemein bekannt. Beispielsweise können Mehrkomponentenester auf Fettsäurebasis oder Ethylenwachse als Schmiermittel eingesetzt werden.

Als UV-Stabilisatoren kommen vor allem Phosphite, Hypophosphite oder Phosphonite, sowie Benzotriazole oder Benzophenone in Betracht. Besonders bevorzugte Stabilisatoren sind Mischungen aus einem Phosphin der allgemeinen Formel VII

PR⁷R⁸R⁹ VII

worin R⁷, R⁸ und R⁹ unabhängig voneinander ein Alkyl, Cycloalkyl, Aryl oder Arylalkyl bedeutet oder eine Arylgruppe, die am aromatischen Ring mit einem oder mehreren Halogenatomen oder einer oder mehreren Alkyl- oder Alkoxygruppen substituiert ist und einem gehindertem Phenol.

Zu den besonders bevorzugten Phosphinen zählen Triethylphosphin, Tributylphosphin, Tripropylphosphin, Triamylphosphin, Trioctylphosphin, Dimethylphenylphosphin, Dibutylphenylphosphin, Diphenylmethylphosphin, Diphenylbutylphosphin, Diphenyloctylphosphin, Diphenyloctadecylphosphin, Triphenylphosphin, Tri(butylphenyl)phosphin, Tri-p-tolylphosphin, Tri(p-nonylphenyl)phosphin, Trinaphthylphosphin, Tri(p-chlorophenyl)phosphin, Tri(p-fluorophenyl)phosphin, Diphenylbenzylphosphin, Diphenyl-(p-hydroxyphenyl)phosphin, Di-phenyl-1,4-dihydroxyphenyl-2-phosphin und Phenylnaphthylbenzylphosphin. Triphenylphosphin ist die besonders bevorzugte Verbindung der Formel VII.

Als gehinderte Phenole kommen insbesondere 2,6-Di-t-butyl-4-methylphenol, 2,6-Di-t-butyl-4-s-butylphenol, 4-(Hydroxymethyl)-2,6-di-t-butylphenol oder 2,6-Di-t-butyl-4-methoxyphenol. Weitere Beispiele bevorzugter Phenole sind Octadecyl-3,5-di-t-butyl-4-hydroxyhydrocinnamat, 2-Methyl-4,6-bis((octylthio)-methyl)-phenol, 2,6-Di-t-butyl-4-(dimethylaminomethyl)phenol oder 3,5-Di-t-butyl-4-hydroxybenzyl-di-O-ethylphosphonat. Darüber hinaus können zweikernige gehinderte Phenole eingesetzt werden. Derartige Stabilisatormischungen sind beispielsweise der DE-A 44 19 897 zu entnehmen.

Als Farbmittel können sowohl organische als auch anorganische Pigmente verwendet werden. Eine Aufstellung geeigneter Farbmittel findet sich beispielsweise bei Gächter/Müller "Kunststoff-Additive", 3. Auflage, Hanser Verlag München, 1989.

Neben den genannten Komponenten können die erfindungsgemäßen Formmassen auch noch geringe Mengen an Homo- oder Copolymeren enthalten, die als Nebenprodukte bei der Pfropfung der Netzwerke d₁ entstehen können. Diese Homo- bzw. Copolymeren weisen jeweils die Zusammensetzung und Glasübergangstemperatur der Pfropf auf läge d₂ auf. Ihre Molekulargewichte (Gewichtsmittelwert M_{w}) liegen unterhalb von 400 000 g/mol, im allgemeinen weniger als 200 000 g/ mol. In der Regel sind diese Nebenprodukte in Mengen von nicht mehr als 10 Gew.-%, bezogen auf die Summe der Komponenten A bis G, enthalten.

Die Herstellung der erfindungsgemäßen Formmassen erfolgt nach an sich bekannten Verfahren durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A bis F und die Zusätze der Gruppe G sind beispielsweise Chlorbenzol, Gemische aus Chlorbenzol und Methylenchlorid oder Gemische aus Chlorbenzol und aromatischen Kohlenwasserstoffen, z.B. Toluol.

Das Mischen der z.B. trockenen Komponenten A, B, C, D, E und gegebenenfalls F und G kann nach allen bekannten Methoden erfolgen. Vorzugsweise geschieht jedoch das Mischen der Komponenten A, B, C, D, E und gegebenenfalls F und G bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind.

Die erfindungsgemäßen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindungsgemäßen Formmassen sind thermoplastisch und zeichnen sich dadurch aus, daß sie witterungs- und alterungsbeständig sind, sehr gute Tieftemperaturzähigkeiten haben und eine gute Wärmeformbeständigkeit aufweisen. Darüberhinaus haben sie eine hervorragende Fließfähigkeit und sind sehr gut schlagzäh. Insbesondere zeichnen sie sich dadurch aus, daß sie Durchstoßarbeiten aufweisen, die weitgehend unabhängig von den Verarbeitungsbedingungen, sprich Massetemperaturen, der Formmassen sind.

Daher eignen sich die erfindungsgemäßen Formmassen vor allem zum Herstellen von Formkörpern, besonders von großteiligen Formkörpern. Besonders eigenen sich die erfindungsgemäßen Formmassen zum Herstellen von Formkörpern für Außenanwendungen. Darunter fallen beispielsweise Fahrzeugteile, insbesondere Karosserieteile für den Einsatz in Personenkraftwagen. Es ist aber auch möglich aus den erfindungsgemäßen Formmassen Folien oder Fasern herzustellen.

### Beispiele

Die mittlere Teilchengröße und die Teilchengrößenverteilung wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert. Zur Charakterisierung der Breite der Teilchengrößenverteilung der Kautschukteilchen werden neben dem d₅₀-Wert (mittlerer Teilchendurchmesser) die sich aus der integralen Massenverteilung ergebenden d₁₀- und d₉₀-Werte herangezogen. Der d₁₀- bzw. d₉₀-Wert der integralen Massenverteilung ist dabei entsprechend dem d₅₀-Wert definiert mit dem Unterschied, daß sie auf 10 bzw. 90 Gew.-% der Teilchen bezogen sind. Der Quotient Q=(d₉₀-d₁₀)/d₅₀ stellt ein Maß für die Verteilungsbreite der Teilchengröße dar.

Es wurden folgende Komponenten eingesetzt:
A¹) Ein handelsübliches Polycarbonat auf der Basis von Bisphenol A mit einer Viskositätszahl von 61,3 ml/g, gemessen an einer 0,5 gew.-%igen Lösung in Methylenchlorid bei 23°C.
B¹) Ein feinteiliges Pfropfpolymerisat, hergestellt aus
   β₁) 16 g Butylacrylat und 0,4 g Tricyclodecenylacrylat, die in 150 g Wasser unter Zusatz von 1 g des Natriumsalzes einer C₁₂-C₁₈-Paraffinsulfonsäure, 0,3 g Kaliumpersulfat, 0,3 g Natriumhydrogencarbonat und 0,15 g Natriumpyrophosphat unter Rühren auf 60°C erwärmt wurden. 10 Minuten nach dem Anspringen der Polymerisationsreaktion wurden innerhalb von 3 Stunden eine Mischung aus 82 g Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße (Gewichtsmittel) wurde zu 76 nm ermittelt und die Teilchengrößenverteilung war eng (Quotient Q = 0,29).
   β₂) 150 g des nach β₁) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die Teilchengröße 91 nm.
B²) Ein grobteiliges Pfropfpolymerisat, das folgendermaßen hergestellt wurde:
   β₃) Zu einer Vorlage aus 1,5 g des nach β₁) hergestellten Latex wurden nach Zugabe von 50 g Wasser und 0,1 g Kaliumpersulfat im Verlauf von 3 Stunden einerseits eine Mischung aus 49 g Butylacrylat und 1 g Tricyclodecenylacrylat und andererseits eine Lösung von 0,5 g des Natriumsalzes einer C₁₂-C₁₈-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt, die Teilchengrößenverteilung war eng (Q = 0,1).
   β₄) 150 g des nach β₃) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.
C¹) Ein Copolymerisat aus Styrol und Acrylnitril im Gew.-Verhältnis 80:20 mit einer Viskositätszahl von 83 ml/g (gemessen an einer 0,5 gew.-%igen Lösung in Dimethylformamid bei 23°C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.
D¹) Ein Netzwerkkautschuk (beispielsweise Metablen® S2001 der Firma Elf Atochem) aus einem vernetzten Dimethylsiloxan mit einer Glasübergangstemperatur T_{g} von -128°C (8,3 Gew.-%, bezogen auf den gesamten Netzwerkkautschuk), einem n-Butylacrylatkautschuk mit einer T_{g} von -45°C und einer Pfropfauflage im wesentlichen aus Methylmethacrylat mit einer T_{g} von 90°C. Die Glasübergangstemperaturen wurden jeweils mittels eines Torsionspendels bei einer Frequenz von 1Hz und einer Aufheizrate von 10°C/min bestimmt.
E¹) Ein Copolymer aus 99 Gew.-% Methylmethacrylat und 1 Gew.-% n-Butylacrylat, charakterisiert durch ein Molekulargewicht (Gewichtsmittelwert M_{w}) von 1.800.000 g/mol (bestimmt mittels Gelpermeationschromatographie in Tetrahydrofuran gegen Polystyrolstandard).

Die T_{g}-Werte der Copolymeren E wurden jeweils durch DSC-Messungen (Aufheizrate 10 K/min, zweiter Cyclus nach Aufheizen auf 175°C und Abkühlen auf Raumtemperatur) ermittelt.
F¹) Resorcinoldiphenylphosphat, z.B. Fyroflex® der Firma Akzo
G¹) Ein hochmolekularer Mehrkomponentenester auf Fettsäurebasis (z.B. Loxiol® G70S der Firma Henkel), charakterisiert durch eine Schmelzviskosität von 110 bis 150 mPas bei 80°C.
G²) Polytetrafluorethylendispersion, z.B. Teflon® Dispersion 30 N der Firma DuPont.

### Herstellung der Formmassen

Die in der Tabelle angegebenen Komponenten wurden in einem Zweiwellenextruder (ZKS 30 der Firma Werner und Pfleiderer) bei 250 bis 280°C gemischt, als Strang ausgetragen, abgekühlt und granuliert. Das getrocknete Granulat wurde bei 250 bis 280°C zu Normkleinstäben bzw. ISO-Prüfkörpern verarbeitet. Die Herstellung von Rundscheiben erfolgte bei 240, 260, 280 und 300°C Massetemperatur und einer Werkzeugtemperatur von 80°C.

### Anwendungstechnische Prüfungen

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Fließfähigkeit (MVI) der Formmassen wurde nach DIN 53 735 bei Temperaturen von 260°C und 5 kg Belastung bestimmt.

Die Kerbschlagzähigkeit wurde nach ISO 179 1eA bei -30°C bestimmt.

Die Durchstoßarbeiten Wₛ [Nm] (Mittelwert aus fünf Einzelmessungen) wurden mittels Durchstoßtests nach DIN 53 443 bei -30°C gemessen. Das Bruchverhalten wurde auch qualitativ anhand der durchstoßenen Prüfkörper beurteilt, wobei zwischen Sprödbruch (S) und duktilem Bruch (D) unterschieden wurde. Die Zahlenwerte geben dabei die Anzahl der duktil gebrochenen Rundscheiben an.

Die Prüfung der Flammwidrigkeit erfolgte im vertikalen Brandtest nach den Vorschriften der Underwriter Laboratories (Ul 94). Die Prüfung wurde an jeweils 5 Proben der Abmessungen 127 mm x 12,7 mmm x 1,7 mm durchgeführt.

Die Einteilung in die entsprechenden Brandklassen erfolgte gemäß UL-94 nach folgenden Kriterien

| Brandklasse | Brennzeit | Gesamtbrennzeit | Brennendes Abtropfen |
|---|---|---|---|
| V-0 | ≤ 10 | ≤ 50 | nein |
| V-1 | ≤ 30 | ≤ 250 | nein |
| V-2 | ≤ 30 | ≤ 250 | ja, mit Entzünden der Watte |
| V-- | keine Zuordnung zu den obigen Klassen möglich | | |

Die Zusammensetzungen und die Eigenschaften der Formmassen sind der Tabelle 1 zu entnehmen.

**Tabelle 1:**

| Formmasse Nr. | V1* | V2 | 1 | 2 | 3 | V3 | 4 | 5 |
|---|---|---|---|---|---|---|---|---|
| Komponente [Gew.-%] A¹ | 60 | 60 | 59,4 | 58,8 | 58,8 | 67,5 | 67,5 | 67,5 |
| B¹ | 20 | 5 | 4,95 | 4,9 | 4,9 | 7 | 5 | 5 |
| B² | - | 5 | 4,95 | 4,9 | 4,9 | 7 | 5 | 5 |
| C¹ | 20 | 20 | 19,8 | 19,6 | 19,6 | 7 | 5 | 5 |
| D¹ | - | 10 | 9,9 | 9,8 | 9,8 | - | 4 | 4 |
| E¹ | - | - | 1 | 2 | 2 | - | 2 | 2 |
| F¹ | - | - | - | - | - | 11 | 11 | 11 |
| G¹ | - | - | - | - | 0,5 | - | - | - |
| G² | - | - | - | - | - | 0,5 | 0,5 | 0,5 |
| Eigenschaften: Vicat B [°C] | 120 | 121 | 121 | 120 | 120 | 100 | 101 | 101 |
| aₖ -30°C [kJ/m²] | 6 | 14 | 14 | 14 | 13 | 3,7 | 9 | 11 |
| Wₛ -30°C [Nm]/ 240/80 Bruchbild | 14 1D | 40 5D | 40 5D | 42 5D | 41 5D | 21 1D | 36 3D | 41 4D |
| Wₛ -30°C [Nm]/ 260/80 Bruchbild | 33 3D | 51 5D | 47 5D | 41 5D | 43 5D | 32 2D | 39 3D | 47 5D |
| Wₛ - -30°C [Nm]/ 280/80 Bruchbild | 10 OD | 50 5D | 42 5D | 47 5D | 46 5D | 22 1D | 29 3D | 41 5D |
| Wₛ -30°C [Nm]/ 300/80 Bruchbild | 51 5D | 11 1D | 20 3D | 46 5D | 45 5D | | | |
| MVI [ml/10 min] | 12 | 13 | 14 | 13 | 15 | 42 | 39 | 38 |
| UL-94 | V-- | V-- | V-- | V-- | V-- | V-O | V-O | V-O |

| | | | | | | | | |
|---|---|---|---|---|---|---|---|---|
| * V: Vergleichsversuch | | | | | | | | |

Die erfindungsgemäßen thermoplastischen Formmassen zeichnen sich durch duktiles Bruchverhalten bei -30°C aus, wobei keine Abhängigkeit von der Massetemperatur beobachtet wird. Desweiteren weisen die erfindungsgemäßen Formmassen sehr gute Zähigkeit und gute Fließfähigkeit auf.

## Patentansprüche

1. Formmassen, enthaltend als wesentliche Komponenten
A) 25 bis 95,4 Gew.-% mindestens eines aromatischen Polycarbonats
B) 2 bis 30 Gew.-% mindestens eines Pfropfpolymerisats, aufgebaut aus
b₁) 40 bis 80 Gew.-% einer Pfropfgrundlage aus einem kautschukelastischen Polymeren auf Basis von Alkylacrylaten mit 1 bis 8 C-Atomen im Alkylrest und mit einer Glasübergangstemperatur von unter 10°C
b₂) 20 bis 60 Gew.-% einer Pfropfauflage aus
b₂₁) 60 bis 95 Gew.-% Styrol oder substituierten Styrolen der allgemeinen Formel I 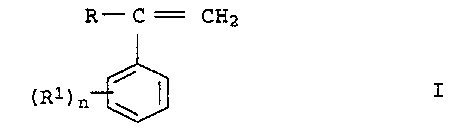 worin R einen Alkylrest mit 1 bis 8 C-Atomen oder ein Wasserstoffatom und R¹ einen Alkylrest mit 1 bis 8 C-Atomen darstellen und n den Wert 1, 2 oder 3 hat und
b₂₂) 5 bis 40 Gew.-% mindestens eines ungesättigten Nitrils,
C) 2 bis 50 Gew.-% eines Copolymerisats aus
c₁) 60 bis 95 Gew.-% Styrol oder substituierten Styrolen der allgemeinen Formel I oder deren Mischungen
c₂) 5 bis 40 Gew.-% mindestens eines ungesättigten Nitrils,
D) 0,5 bis 25 Gew.-% mindestens eines Netzwerkkautschukes auf der Basis von Siloxanen und Acrylaten oder Methacrylaten,
E) 0,1 bis 5 Gew.-% mindestens eines Copolymeren mit einem Molekulargewicht (Gewichtsmittelwert M_{w}) von mindestens 1.000.000 g/mol aus mindestens zwei unterschiedlichen Estern der Acrylsäure oder der Methacrylsäure oder deren Mischungen,
F) 0 bis 25 Gew.-% mindestens einer halogenfreien Phosphorverbindung und
G) 0 bis 45 Gew.-% Zusatzstoffe,
wobei sich die Summe der Komponenten A bis G zu 100 Gew.-% addiert.

2. Formmassen nach Anspruch 1, enthaltend als wesentliche Komponenten
A) 25 bis 88,8 Gew.-% mindestens eines Polycarbonats A,
B) 5 bis 25 Gew.-% mindestens eines Pfropfpolymerisats B,
C) 5 bis 40 Gew.-% mindestens eines Copolymerisats C,
D) 1 bis 15 Gew.-% mindestens eines Netzwerkkautschukes D,
E) 0,2 bis 3 Gew.-% mindestens eines Copolymeren E.

3. Formmassen nach Anspruch 1 oder 2, in denen als Netzwerkkautschuk D ein Netzwerkkautschuk mit einer Pfropfhülle aus 95 bis 100 Gew.-% Methylmethacrylat eingesetzt wird.

4. Formmassen nach einem der Ansprüche 1 bis 3, in denen das Copolymer E aus Methylmethacrylat und n-Butylacrylat oder Methylmethacrylat und 2-Ethyl-hexylacrylat aufgebaut ist.

5. Verwendung der Formmassen gemäß einem der Ansprüche 1 bis 6 zur Herstellung von Formkörpern, Folien oder Fasern.

6. Verwendung der Formmassen nach Anspruch 5 zur Herstellung von Karosserieteilen.

7. Formkörper, Folien oder Fasern, erhältlich aus den Formmassen gemäß einem der Ansprüche 1 bis 4.

8. Karosserieteile, erhältlich aus den Formmassen gemäß einem der Ansprüche 1 bis 4.

## Claims

1. A molding material containing, as essential components,
A) from 25 to 95.4% by weight of at least one aromatic polycarbonate,
B) from 2 to 30% by weight of at least one graft polymer composed of
b₁) from 40 to 80% by weight of a grafting base comprising an elastomeric polymer based on alkyl acrylates where the alkyl radical is of from 1 to 8 carbon atoms and having a glass transition temperature of less than 10°C
b₂) from 20 to 60% by weight of a graft layer comprising
b₂₁) from 60 to 95% by weight of styrene or substituted styrenes of the general formula I 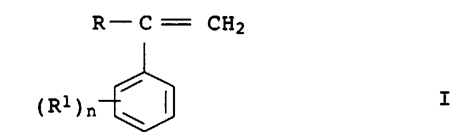 where R is alkyl of 1 to 8 carbon atoms or hydrogen, R¹ is alkyl of 1 to 8 carbon atoms and n is 1, 2 or 3, and
b₂₂) from 5 to 40% by weight of at least one unsaturated nitrile,
C) from 2 to 50% by weight of a copolymer of
c₁) from 60 to 95% by weight of styrene or substituted styrenes of the general formula I or mixtures thereof
c₂) from 5 to 40% by weight of at least one unsaturated nitrile,
D) from 0.5 to 25% by weight of at least one network rubber based on siloxanes and acrylates or methacrylates,
E) from 0.1 to 5% by weight of at least one copolymer having a weight average molecular weight (M_{w}) of at least 1,000,000 g/mol of at least two different esters of acrylic acid or of methacrylic acid or mixtures thereof,
F) from 0 to 25% by weight of at least one halogen-free phosphorus compound and
G) from 0 to 45% by weight of additives,
the sum of components A to G being 100% by weight.

2. A molding material as claimed in claim 1, containing, as essential components,
A) from 25 to 88.8% by weight of at least one polycarbonate A,
B) from 5 to 25% by weight of at least one graft polymer B,
C) from 5 to 40% by weight of at least one copolymer C,
D) from 1 to 15% by weight of at least one network rubber D and
E) from 0.2 to 3% by weight of at least one copolymer E.

3. A molding material as claimed in claim 1 or 2, in which a network rubber having a graft shell of from 95 to 100% by weight of methyl methacrylate is used as network rubber D.

4. A molding material as claimed in any of claims 1 to 3, in which the copolymer E is composed of methyl methacrylate and n-butyl acrylate or methyl methacrylate and 2-ethylhexyl acrylate.

5. The use of a molding material as claimed in any of claims 1 to 4 for the production of moldings, films or fibers.

6. The use of a molding material as claimed in claim 5 for the production of bodywork parts.

7. A molding, film or fiber obtainable from a molding material as claimed in any of claims 1 to 4.

8. A bodywork part obtainable from a molding material as claimed in any of claims 1 to 4.

## Revendications

1. Masses de moulage, comprenant en tant que composants essentiels
A) de 25 à 95,4% en poids d'au moins un polycarbonate aromatique
B) de 2 à 30% en poids d'au moins un copolymère de greffage, constitué de:
b₁) 40 à 80% en poids d'une base de greffage composée d'un polymère élastique caoutchouteux à base d'acrylates d'alkyle comportant de 1 à 8 atomes de carbone dans le radical alkyle et présentant une température de transition vitreuse inférieure à 10°C
b₂) de 20 à 60% en poids d'une couche de greffage constituée de
b₂₁₎ de 60 à 95% en poids de styrène ou de styrènes substitués de la formule générale I 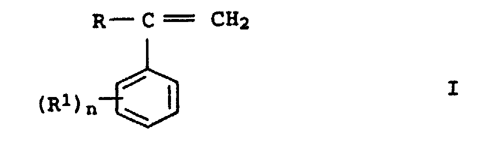 dans laquelle R représente un radical alkyle comportant de 1 à 8 atomes de carbone ou un atome d'hydrogène, et R¹ représente un radical alkyle comportant de 1 à 8 atomes de carbone, et n a la valeur 1, 2 ou 3, et
b₂₂) de 5 à 40% en poids d'au moins un nitrile insaturé,
C) de 2 à 50% en poids d'un copolymère composé de:
c₁) de 60 à 95% en poids de styrène ou de styrènes substitués de la formule générale I ou leurs mélanges
c₂) de 5 à40% en poids d'au moins un nitrile insaturé,
D) de 0,5 à 25% en poids d'au moins un caoutchouc réticulé à base de siloxanes et d'acrylates ou de méthacrylates,
E) de 0,1 à 5% en poids d'au moins un copolymère d'un poids moléculaire (moyenne pondérale M_{w}) d'au moins 1.000 000 g/mole constitué d'au moins deux esters différents de l'acide acrylique ou de l'acide méthacrylique ou de leurs mélanges,
F) de 0 à 25% en poids d'au moins un composé phosphoré exempt d'halogènes, et
G) de 0 à 45% en poids d'additifs,
la somme des composants A à G totalisant 100% en poids.

2. Masses de moulage selon la revendication 1, contenant en tant que principaux composants
A) de 25 à 88,8% en poids d'au moins un polycarbonate A,
B) de 5 à 25% en poids d'au moins un copolymère greffé B,
C) de 5 à 40% en poids d'au moins un copolymère C,
D) de 1 à 15% en poids d'au moins un caoutchouc réticulé D,
E) de 0,2 à 3%µ en poids d'au moins un copolymère E.

3. Masses de moulage selon la revendication 1 ou 2, caractérisées en ce que l'on met en oeuvre, en tant que caoutchouc réticulé D, un caoutchouc réticulé comportant une enveloppe de greffage constituée de 95 à 100% en poids de méthacrylate de méthyle.

4. Masses de moulage selon l'une des revendications 1 à 3, caractérisées en ce que le copolymère E est constitué de méthacrylate de méthyle et d'acrylate de n-butyle ou de méthacrylate de méthyle et d'acrylate de 2-éthylhexyle.

5. Utilisation des masses de moulage selon l'une des revendications 1 à 6 pour la production d'articles façonnés, de feuilles ou de fibres.

6. Utilisation des masses de moulage selon la revendication 5 pour la fabrication d'éléments de carrosseries.

7. Articles façonnés, feuilles ou fibres, que l'on peut obtenir à partir des masses de moulage selon l'une des revendications 1 à 4.

8. Eléments de carrosseries, que l'on peut obtenir à partir des masses de moulage selon l'une des revendications 1 à 4.
